Europäisches Patentamt

European Patent Office

Office européen des brevets

(19)

(11) Veröffentlichungsnummer: **0 253 953 B1**

(12) **EUROPÄISCHE PATENTSCHRIFT**

(45) Veröffentlichungstag der Patentschrift: **25.11.92**

(21) Anmeldenummer: **87104483.0**

(22) Anmeldetag: **26.03.87**

(51) Int. Cl.⁵: $H02G\ 9/06$

(54) **Rohrverbund aus Polymer-Rohren.**

(30) Priorität: **22.07.86 DE 3625127**

(43) Veröffentlichungstag der Anmeldung:
**27.01.88 Patentblatt 88/04**

(45) Bekanntmachung des Hinweises auf die
Patenterteilung:
**25.11.92 Patentblatt 92/48**

(84) Benannte Vertragsstaaten:
**AT BE CH ES FR GB GR IT LI LU NL SE**

(56) Entgegenhaltungen:
**CH-A- 494 916**
**DE-A- 2 539 210**
**DE-A- 3 210 404**
**DE-A- 3 308 479**
**DE-U- 7 613 404**

(73) Patentinhaber: **REHAU AG + Co**
**Rheniumhaus**
**W-8673 Rehau(DE)**

(72) Erfinder: **Der Erfinder hat auf seine Nennung
verzichtet**

EP 0 253 953 B1

## Beschreibung

Die Erfindung betrifft einen Rohrverbund aus einer Anzahl parallel zueinander verlaufender Polymer-Rohre, wobei die Einzelrohre durch flexible Bänder zu dem Rohrverbund zusammengefaßt sind und wobei die Bänder tangential über die Breite des Rohrverbundes verlaufend mit definierten Oberflächenbereichen der Einzelrohre fest verbunden sind.

Ein derartiger Rohrverbund ist durch die DE-U 82 13 407.3 bekannt geworden. Dort sind die Einzelrohre des Rohrverbundes durch flexible Abstandsstege zu einer Matte vereinigt. Die Flexibilität der Abstandsstege läßt es zu, daß der Rohrverbund aus der waagerechten Erstreckung der Einzelrohre zu einem Rohrbündel zusammengeklappt werden kann. Je nach Länge der Abstandsstege kann dieses Zusammenlegen derart erfolgen, daß die Einzelrohre untereinander in linienförmiger Berührung stehen und trotzdem durch die Abstandsstege aneinander gehaltert sind. Der Nachteil dieses Rohrverbundes liegt in der aufwendigen Fertigung und in der Möglichkeit des Abreißens der Abstandsstege, beispielsweise beim Einziehen dieses zum Rohrbündel zusammengelegten Rohrverbundes in im Erdboden verlegte Kabelschutzrohre.

Aus der DE-A 36 06 767.9 ist ein flexibler, geschlossener Rohrverbund bekannt, der durch mit flexiblen Bändern verbundene Rohre gebildet wird. Auch in diesem Fall liegen die Einzelrohre parallel zueinander im Rohrverbund, wobei die Einzelrohre durch die Bänder im Abstand voneinander verbunden sind. Im Gegensatz zu der durch die flexiblen Abstandsstege zu einer Matte vereinigten Rohre des erstgenannten Standes der Technik ergibt sich dadurch ein Rohrbündel, in dem alle Einzelrohre durch die Abstand haltenden Bänder miteinander verbunden sind. In beiden Fällen wird erreicht, daß die so geschaffenen Rohrverbunde ohne Auflösung des Verbundes getrommelt werden können.

Weiter ist aus der DE-A 32 10 404 ein Rohrverbund aus einer Anzahl parallel zueinander verlaufender Kunststoffrohre bekannt, bei dem die Einzelrohre durch ein flexibles Band zusammengefaßt sind. Das Band verläuft dabei einseitig tangential über die Breite des Rohrverbundes und ist mit definierten Oberflächenbereichen der Einzelrohre fest verbunden.

Ähnliche Rohrverbunde sind in der DE-A 33 08 479 und DE-A 25 39 210 beschrieben.

In Weiterführung des Standes der Technik hat sich die Erfindung die Aufgabe gestellt, einen Rohrverbund zu schaffen, in dem die Einzelrohre neben der einseitigen radialen Beweglichkeit in vorgegebenen Grenzen auch axial bewegbar sind. Erfindungsgemäß wird dazu vorgeschlagen, daß die Einzelrohre durch ein spiralig gewickeltes Band zu dem Rohrverbund zusammengefaßt sind.

Die Herstellung eines solchen Rohrverbundes ist denkbar einfach. Die Einzelrohre können hier mit einfachen Rohrwerkzeugen gefertigt werden. Nach der Fertigung werden sie parallel zueinander im ausgestreckten Zustand gehalten und das spiralig gewickelte Verbindungsband mit den zugeordneten Oberflächenbereichen der Einzelrohre fest verbunden. Diese feste Verbindung kann beispielsweise durch Schweißen erfolgen, wobei hier das Ultraschall-Schweißen als vorteilhaft erscheint. Die Verbindung kann auch durch Kleben erfolgen. In einer vorteilhaften Ausführungsform stehen die Wendel des Bandes in definiertem Abstand voneinander.

Der besondere Vorteil gegenüber den tangential quer zur Rohrachse aufgebrachten Haltebändern ist darin zu sehen, daß durch die spiralige Wicklung eine axiale Verschieblichkeit der Einzelrohre des Rohrverbundes untereinander möglich wird.

Diese Bewegungsmöglichkeit ist insbesondere dann von Interesse, wenn der Rohrverbund als Band nebeneinander angeordneter Einzelrohre ohne umschließendes Kabelschutzrohr im Boden direkt verlegt wird. Aufgrund der axialen Beweglichkeit der Einzelrohre untereinander kommt es in diesem Fall beispielsweise beim Verlegen des Rohrverbundes in einem Bogen nicht zu dem schädlichen Über- bzw. Unterschnappen eines oder mehrerer Einzelrohre unter ein anderes Rohr des Verbundes. Der bei der Krümmung erforderliche Längenausgleich ergibt sich erfindungsgemäß durch die Längsverschieblichkeit der Einzelrohre gegeneinander bei gleichzeitigem Festhalten im Verbund.

Vorteilhaft können die Einzelrohre auch in definiertem Seltenabstand durch das spiralig gewickelte Band in paralleler Erstreckung nebeneinander festgelegt werden. Dadurch ergibt sich eine erweiterte radiale und axiale Bewegungsmöglichkeit des Rohrverbundes gegenüber dem erfindungsgemäßen Rohrverbund mit aneinander längsanliegenden Einzelrohren.

In der Zeichnung sind Ausführungsbeispiele des Rohrverbundes nach der Erfindung schematisch dargestellt; es zeigt:

Fig.1 den Rohrverbund mit Verbindungsbändern und parallel nebeneinander angeordneten Einzelrohren nach dem Stand der Technik

Fig.2 den zusammengeklappten Rohrverbund gemäß Fig.1

Fig.3 den Rohrverbund mit spiralig umwickeltem Verbindungsband.

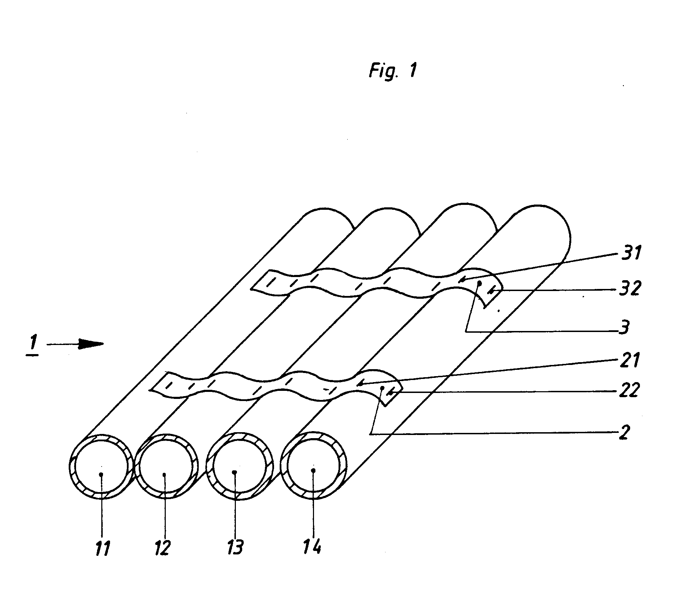

Der in Fig.1 gezeigte Rohrverbund besteht aus den vier Einzelrohren 11, 12, 13, 14. An definierten Oberflächenbereichen der Einzelrohre 11, 12, 13, 14 sind die Verbindungsbänder 2, 3 festgelegt.

In der gezeigten Darstellung sind jeweils zwei Schweißstellen 21, 22, 31, 32 enthalten, über die die Verbindungsbänder 2, 3 auf den definierten Oberflächenbereichen der Einzelrohre 11, 12, 13, 14 festgelegt sind.

Die Verbindungsbänder 2, 3 können in beliebig wählbarem Abstand auf den Oberflächen der Einzelrohre 11, 12, 13, 14 festgelegt werden. Neben dem beschriebenen Ultraschallverschweißen können auch andere Schweißverfahren sowie ein Verkleben der Bänder 2, 3 mit den zugeordneten Oberflächen der Einzelrohre 11, 12, 13, 14 eingesetzt werden. Voraussetzung hierzu ist die Wahl eines entsprechenden Klebstoffes.

In der in Fig.1 gezeigten horizontalen Erstreckung kann der Rohrverbund aufgrund der dem Kunststoff innewohnenden Flexibilität leicht getrommelt werden. Die festgelegten Bänder 2, 3 auf den definierten Oberflächenbereichen der Einzelrohre 11, 12, 13, 14 reichen hierbei aus, um den Rohrverbund während des Trommelns, während der anschliessenden Lagerung und beim Wiederabrollen von der Trommel zusammenzuhalten.

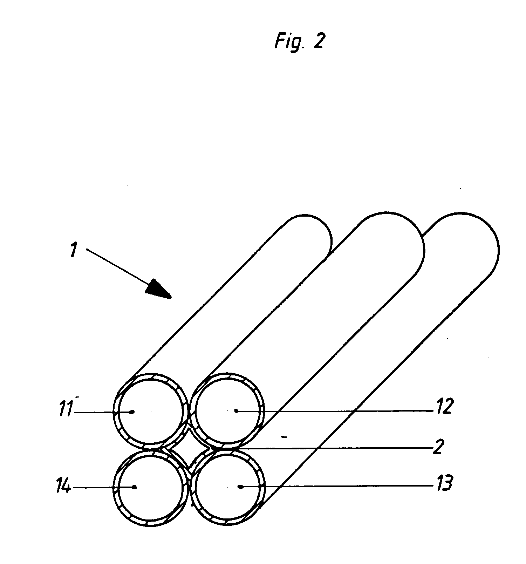

Fig.2 zeigt den Rohrverbund 1 im zusammengeklappten Zustand. Die Einzelrohre 11, 12, 13, 14 sind dabei in der Richtung zusammengelegt, die durch die aufgebrachten Verbindungsbänder 2, 3 definiert ist.

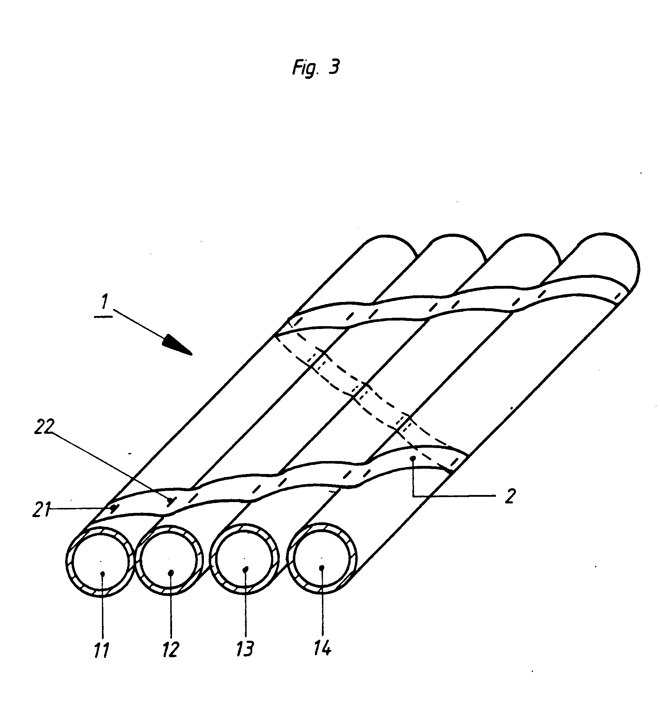

Fig.3 zeigt den Rohrverbund nach der Erfindung mit einem Verbindungsband 2, welches spiralig um die gestreckt nebeneinander liegenden Einzelrohre 11, 12, 13, 14 gewickelt ist. Das Verbindungsband 2 kann ebenfalls nur durch zwei Schweißstellen 21, 22 an jeder zugeordneten Oberfläche der Einzelrohre 11, 12, 13, 14 festgelegt sein. Die erfindungsgemäße Anordnung des Verbindungsbandes 2 kann derart erfolgen, daß die Einzelrohre 11, 12, 13, 14 in definiertem Abstand voneinander ausgestreckt nebeneinander angeordnet sind.

Der Vorteil dieser Anordnungsart wird darin gesehen, daß der so geschaffene Rohrverbund 1 nicht nur in radialer Richtung bewegt werden kann, sondern daß die Einzelrohre 11, 12, 13, 14 sich auch in axialer Richtung gegeneinander verschieben lassen. Dies ist besonders wichtig bei der Verlegung des Rohrverbundes 1 in Kurven. Hier kann der Abstand der Wendel des Verbindungsbandes 2 zueinander entsprechend den Anforderungen bei der Verlegung des Rohrverbundes so gewählt werden, daß die bei der Verlegung zu bewältigenden Krümmungen beispielsweise des in der Erde befindlichen Kabelschutzrohres durch die axiale Bewegbarkeit der Einzelrohre untereinander von vornherein berücksichtigt ist.

## Patentansprüche

1. Rohrverbund aus einer Anzahl parallel zueinander verlaufender Polymer-Rohre, wobei die Einzelrohre (11, 12, 13, 14) durch flexible Bänder (2, 3) zusammengefaßt sind und wobei die Bänder (2, 3) tangential über die Breite des Rohrverbundes verlaufend mit definierten Oberflächenbereichen der Einzelrohre (11, 12, 13, 14) fest verbunden sind, dadurch gekennzeichnet, daß die Einzelrohre (11, 12, 13, 14) durch ein spiralig gewickeltes Band (2) zu dem Rohrverbund zusammengefaßt sind.

2. Rohrverbund nach Anspruch 1, dadurch gekennzeichnet, daß die Wendel des Bandes (2) in definiertem Abstand zueinander stehen.

3. Rohrverbund nach Ansprüchen 1 und 2, dadurch gekennzeichnet, daß die Einzelrohre (11, 12, 13, 14) in definiertem Abstand voneinander durch das Band (2) in paralleler Erstreckung nebeneinander festgelegt sind.

## Claims

1. Multiple-duct tubing comprising a number of polymer tubes running parallel to one another, with the individual tubes (11, 12, 13, 14) being held together by flexible tapes (2, 3) and with these tapes (2, 3) being permanently connected tangentially throughout the width of the multiple-duct tubing to defined surface areas of the individual tubes (11, 12, 13, 14), characterised by the fact that the individual tubes (11, 12, 13, 14) are grouped together by a spirally wound tape (2) to form the multiple-duct tubing.

2. Multiple-duct tubing as described in claim 1, characterised by the fact that the turns in the tape (2) are spaced apart at a defined distance.

3. Multiple-duct tubing as described in claims 1 and 2, characterised by the fact that the individual tubes (11, 12, 13, 14) are spaced apart in parallel formation at a defined distance by the tape (2)

## Revendications

1. Assemblage de tubes, composé d'un certain nombre de tubes en polymère, parallèles les uns par rapport aux autres, sachant que les tubes individuels (11, 12, 13, 14) sont reliés entre eux par des attaches flexibles (2, 3), celles-ci étant reliées de façon fixe et disposées tangentiellement sur la largeur de l'assemblage de tubes avec des zones de surfaces définies des tubes individuels (11, 12, 13, 14), caractérisé par le fait que les tubes individuels (11,12, 13, 14) sont assemblés par une attache enroulée en spirale (2) par rapport à l'assemblage de tubes.

2. Assemblage de tubes selon la revendication 1, caractérisé par le fait que les hélices de l'attache (2) sont à une distance définie les unes des autres.

3. Assemblage de tubes selon les revendications 1 et 2, caractérisé par le fait que les tubes individuels (11, 12, 13,14) sont fixés parallèlement étirés les uns à côté des autres au moyen de l'attache (2) et à une distance définie les uns des autres.

Fig. 1

Fig. 2

Fig. 3